Europäisches Patentamt

European Patent Office

Office européen des brevets

(19)

(11) Numéro de publication: **0 088 675**
**B1**

(12) **FASCICULE DE BREVET EUROPEEN**

(45) Date de publication du fascicule du brevet:
11.06.86

(51) Int. Cl.⁴: **G 21 C 3/32**

(21) Numéro de dépôt: 83400406.1

(22) Date de dépôt: 28.02.83

(54) Assemblage combustible de réacteur nucléaire.

(30) Priorité: 04.03.82 FR 8203608

(43) Date de publication de la demande:
14.09.83 Bulletin 83/37

(45) Mention de la délivrance du brevet:
11.06.86 Bulletin 86/24

(84) Etats contractants désignés:
BE DE FR GB IT NL

(56) Documents cités:
EP - A - 0 025 392
FR - A - 2 058 306
FR - A - 2 070 028
FR - A - 2 088 009
GB - A - 1 138 967
GB - A - 2 000 896
US - A - 3 814 667

(73) Titulaire: COMMISSARIAT A L'ENERGIE ATOMIQUE
Etablissement de Caractère Scientifique Technique et
Industriel, 31/33, rue de la Fédération, F-75015 Paris (FR)

(72) Inventeur: Feutrel, Claude, 105 Grande rue,
F-91430 Vauhallan (FR)

(74) Mandataire: Mongrédien, André et al, c/o
BREVATOME 25, rue de Ponthieu, F-75008 Paris (FR)

## Description

La présente invention a pour objet un assemblage combustible de réacteur nucléaire dont les crayons sont solidaires d'une pièce d'extrémité et dans lequel l'ensemble des grilles est maintenu en appui contre l'une des pièces d'extrémité.

Plus précisément, l'invention concerne un assemblage combustible de réacteur nucléaire refroidi à l'eau, comportant deux pièces d'extrémité, respectivement une pièce d'extrémité supérieure et une pièce d'extrémité inférieure, ces pièces comportant des orifices pour la circulation de l'eau légère de refroidissement, des tiges de liaison rigides ou tubes-guides, fixées à leurs deux extrémités, respectivement à la pièce d'extrémité inférieure et à la pièce d'extrémité supérieure, des grilles d'espacement réalisées en un métal présentant une relaxation sous irradiation et constituées par deux familles de tôles perpendiculaires, ces grilles délimitant des alvéoles traversés chacun soit par un crayon combustibles soit par une tige de liaison, lesdites grilles d'espacement étant réparties le long desdites tiges de liaison, les parois de chaque alvéoles comportant des éléments d'appui qui maintiennent les crayons combustibles, leurs extrémités étant solidaires de la pièce d'extrémité inférieure.

On connaît (FR-A-2.070 028) un assemblage combustible de ce type. Il comporte une pièce d'extrémité supérieure et une pièce d'extrémité inférieure, des tubes-guides répartis, des grilles d'espacement fixées sur les tubes-guides. Les grilles comportent des bossages et des ressorts qui maintiennent les crayons combustibles en appui sur les bossages. Les crayons combustibles sont solidarisés à la plaque support d'assemblage par écrasement de la partie inférieure du bouchon.

. Dans cet assemblage, le problème de l'envol des grilles et des crayons combustibles sous l'effet de la circulation de l'eau de refroidissement est résolu en fixant les grilles aux tubes-guides et les crayons à la plaque de support d'assemblage. Cependant, dans cette réalisation, les grilles comportent des ressorts rapportés réalisés en un métal différent du métal de base de la grille. Ces ressorts rapportés augmentent l'absorption des neutrons parce que, pour des raisons de résistance mécanique, il n'est pas possible de les réaliser dans un matériau présentant un faible pouvoir d'absorption des neutrons tel que le Zircaloy. Ils sont rélisés de manière classique en Inconel.

On connaît également (FR-A-2.088 009) un assemblage combustible de réacteur nucléaire comprenant des grilles espacées par des entretoises tubulaires. Un jeu suffisant est prévu entre le bouchon supérieur des crayons combustibles et la plaque supérieure pour n'être pas rattrapé lors de l'allongement différentiel total en service des crayons combustibles. Dans cette réalisation, rien n'empêche l'envol de l'ensemble constitué par les grilles et les crayons combustibles. En outre, les grilles d'espacement ne sont pas réalisées en un matériau présentant un faible pouvoir d'absorption des neutrons. En effet, elle sont constituées en acier inoxydable ou en Incoi

La présente invention a pour objet un assemblage combustible de réacteur nucléaire comportant des grilles d'espacement réalisées e un métal présentant une relaxation sous irradiati et un faible pouvoir d' absorption des neutrons c remédient aux inconvénients de l'art antérieur mentionnés ci-dessus, c'est-à-dire, en d'autres termes, qui ne comporte pas de ressorts rapport réalisés en un matériau différent du métal de bas de la grille.

Conformément à l'invention, l'assemblage combustible comporte des entretoises enfilées su les tiges de liaison et disposées entre les grilles, des moyens à ressorts plaquant l'ensemble des grilles vers l'une des pièces d'extrémité inférieur et supérieure aussi bien pendant le fonctionneme du réacteur qu'à l'arrêt, les grilles et les éléments d'appui qui maintiennent les crayons combustible étant réalisés en un matériau unique présentant u faible pouvoir d'absorption des neutrons.

Ainsi, l'assemblage combustible de l'invention utilise des grilles d'entretoisement transversal san fonction de supportage lors du fonctionnement. L entretoises enfilées sur les tiges de liaison et les moyens à ressorts plaquent l'ensemble des grilles vers l'une des pièces d'extrémité inférieure et supérieure, ce qui permet d'éviter l'envol des crayons et des grilles sous l'effet de la circulation du courant d'eau de refroidissement. De plus, les grilles, qui sont réalisées entièrement en un matériau présentant un faible pouvoir d'absorptior des neutrons, tel que le Zircaloy, absorbent peu le: neutrons et sont par conséquent très avantageuse: du point de vue du rendement global du réacteur.

Le fonctionnement d'un assemblage combustibl réalisé conformément à l'invention se déroule en deux phases successives.

Au début de la vie de l'assemblage, les grilles d'espacement sont serrées sur les crayons combustibles. Les points d'appui sur les crayons permettent en effet d'assurer un effort de serrage suffisant. Les grilles suivent donc la dilatation des crayons combustibles, ce qui les entraîne vers le haut.

Dans une deuxième phase se produit la relaxation des points d'appui des grilles sur les crayons combustibles. Les grilles glissent donc le long des crayons. C'est alors que les moyens, notamment élastiques prévus pour maintenir les grilles par rapport à l'une des pièces d'extrémité inférieure ou supérieure entrent en jeu. Ces moyens élastiques suppléent au relâchement du serrage des grilles sur les crayons. Néanmoins, à partir de ce moment, les grilles d'espacement continuent d'assurer la fonction d'espacement des crayons combustibles du faisceau. Dans chaque alvéole, les crayons combustibles sont entretoisés sans jeu par les points d'appui pratiqués dans les parois des cloisons des alvéoles de la grille. Pas suite, il est nécessaire d'assurer l'anti-envol des crayons combustibles sous l'effet de la circulation du fluide ascendant de refroidissement. Ceci est obtenu conformément à l'invention en rendant les crayons combustibles solidaires de la pièce d'extrémité inférieure.

En général, les crayons combustibles sont constitués par une gaine dans laquelle sont introduites des pastilles de combustible fissile et/ou fertile. Cette gaine est germée à chacune de ses extrémités par un bouchon.

De préférence, et conformément à l'invention dans l'une de ses caractéristiques secondaires, les bouchons des éléments combustibles situés à l'extrémité solidarisée avec une plaque d'extrémité sont allongés et comportent à leur extrémité un embout cylindrique muni d'une gorge annulaire, la pièce d'extrémité correspondante comportant un trou destiné à recevoir l'embout du bouchon, ce trou comportant une gorge annulaire semi-torique dans laquelle est logé un jonc flottant. De préférence, ce trou est prolongé par un orifice de plus faible diamètre permettant la circulation de l'eau.

Il existe plusieurs modes de réalisation de l'invention.

Selon un premier mode de réalisation, on exerce un effort élastique sur les grilles qui maintient ces dernières vers le bas, c'est-à-dire vers la pièce d'extrémité inférieure. Selon ce mode de réalisation, les moyens élastiques sont constitués par exemple par une pluralité de ressorts enfilés sur les tiges de liaison, ces ressorts étant arrêtés à l'une de leurs extrémités et repoussant les grilles vers le bas par leur autre extrémité. De façon plus précise, l'assemblage combustible selon l'invention est caractérisé en ce que les moyens pour plaquer les grilles d'espacement contre l'une des pièces d'extrémité sont constitués par des entretoises rigides enfilées sur les tiges de liaison et disposées entre les grilles, et par des ressorts repoussant chacune des grilles vers le bas.

De préférence, les ressorts sont enfilés sur une tige centrale et arrêtés à l'une de leurs extrémités sur cette tige.

Selon un second mode de réalisation, on plaque les grilles d'espacement vers le haut, c'est-à-dire contre la pièce d'extrémité supérieure. Un tel mode de réalisation présente l'avantage que les moyens élastiques n'agissent plus, comme dans le mode de réalisation prédécent, à l'encontre du courant ascendant de fluide de refroidissement, mais dans le même sens que lui. Par suite, l'effort nécessaire est moindre, puisque la force exercée par les moyens élastiques et celle exercée par le fluide de refroidissement agissent dans le même sens. Dans ce cas, les ressorts ont simplement pour but de maintenir l'ensemble des grilles lorsque le réacteur est à l'arrêt, c'est-à-dire lorsque le courant de fluide de refroidissement a cessé. Un seul ressort par tige de liaison, ou même sur une partie des tiges de liaison, peut alors suffir.

Ce mode de réalisation comporte deux variantes. Dans les deux variantes, on dispose des ressorts autour des tiges de liaison, entre la pièce d'extrémité inférieure et la grille inférieure. Selon la première variante, l'effort exercé par ces ressorts est transmis de la grille inférieure aux autres grilles par des entretoises rigides enfilées sur les tiges de liaison. De préférence, on ajoute des ressorts de compensation entre la grille supérieure et la pièce d'extrémité supérieure.

Selon une seconde variante de réalisation, l'effort exercé par les ressorts disposés sur les tiges de liaison est transmis de la grille inférieure aux autres grilles par des entretoises élastiques.

D'autres caractéristiques et avantages de l'invention apparaîtront encore à la lecture de la description qui suit, faite en référence aux dessins annexés, sur lesquels :

- les figures 1a à 1c représentent un premier mode de réalisation de l'invention, dans lequel les grilles d'espacement sont repoussées vers la pièce d'extrémité inférieure ;

- les figures 2a, 2b, 2c et 3a, 3b, 3c représentent deux variantes d'un second mode de réalisation dans lequel les grilles d'espacement sont repoussées élastiquement vers la pièce d'extrémité supérieure ;

- la figure 4 représente une vue de détail qui montre un mode préférentiel de réalisation de la solidarisation du pied d'un crayon combustible à la plaque de la pièce d'extrémité inférieure ;

- la figure 5 représente une vue de détail, en perspective, montrant la fixation d'un ressort sur la tige centrale utilisée dans le cas du premier mode de réalisation représenté sur la figure 1 ;

- la figure 6 représente une vue en perspective montrant le détail de la réalisation d'une entretoise élastique utilisée dans le mode de réalisation de la figure 3 et la façon dont elle est montée ;

- la figure 7 représente une vue en perspective montrant le détail de la réalisation d'une entretoise rigide conforme à la présente invention ;

- la figure 8 représente une vue de détail en perspective montrant une autre réalisation d'une grille d'espacement et d'une entretoise rigide conforme à la présente invention ;

- la figure 9 représente une vue de dessus montrant une réalisation particulière de la grille d'espacement de la figure 8.

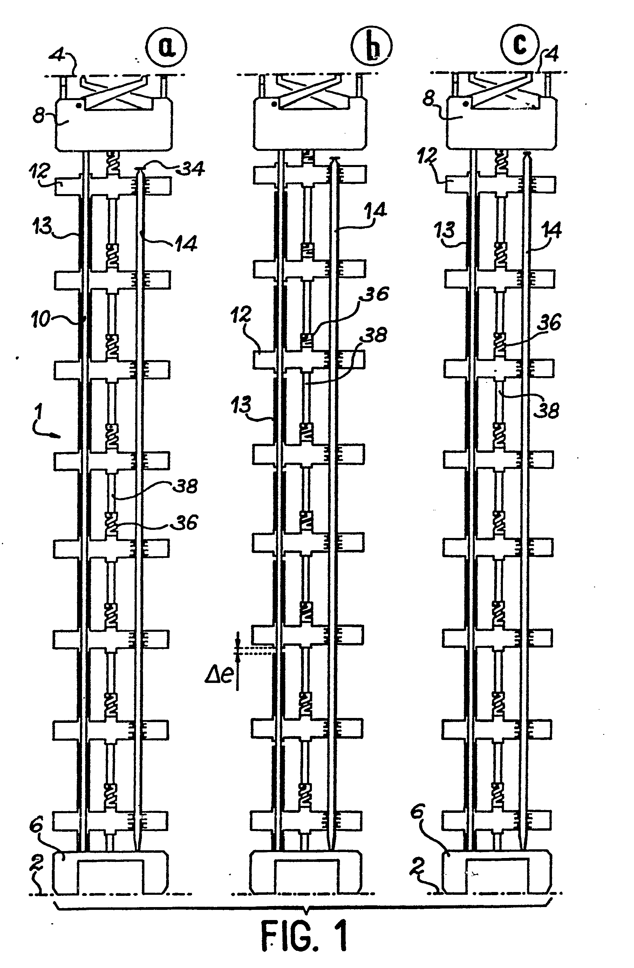

On a représenté sur la figure 1 un premier mode de réalisation de l'invention. La figure comporte trois vues : a, b, c, représentant un assemblage combustible à différentes étapes de sa vie.

Comme on l'a rappelé, l'assemblage 1 est disposé entre une plaque support de coeur inférieure 2 et une plaque de coeur supérieure 4, schématisées sur les figures par une ligne en traits mixtes, ces plaques appartenant aux équipements internes de la cuve du réacteur. L'assemblage comporte une armature mécanique rigide composée de deux pièces d'extrémité, une pièce d'extrémité inférieure 6 et une pièce d'extrémité supérieure 8 munie d'orifices permettant le passage de l'eau de réfrigération qui circule de bas en haut. Des tiges de liaison 10 assurent la rigidité de l'ensemble par leur fixation aux pièces d'extrémité 6 et 8. Des grilles 12, réparties le long des tiges de liaison 10, assurent l'espacement des crayons combustibles 14. L'espacement des différentes grilles est assuré par des entretoises rigides 13.

Les crayons combustibles 14, dont un seul a été représenté sur la figure 1 afin de ne pas surcharger le dessin, se composent généralement d'une gaine métallique 18 à l'intérieur de laquelle sont empilées des pastilles 16 fissiles et/ou fertiles. La gaine 18 est terminée à chacune de ses extrémités par un bouchon de fermeture. Conformément à l'invention, les crayons combustibles 14 sont rendus solidaires de la pièce d'extrémité inférieure 6.

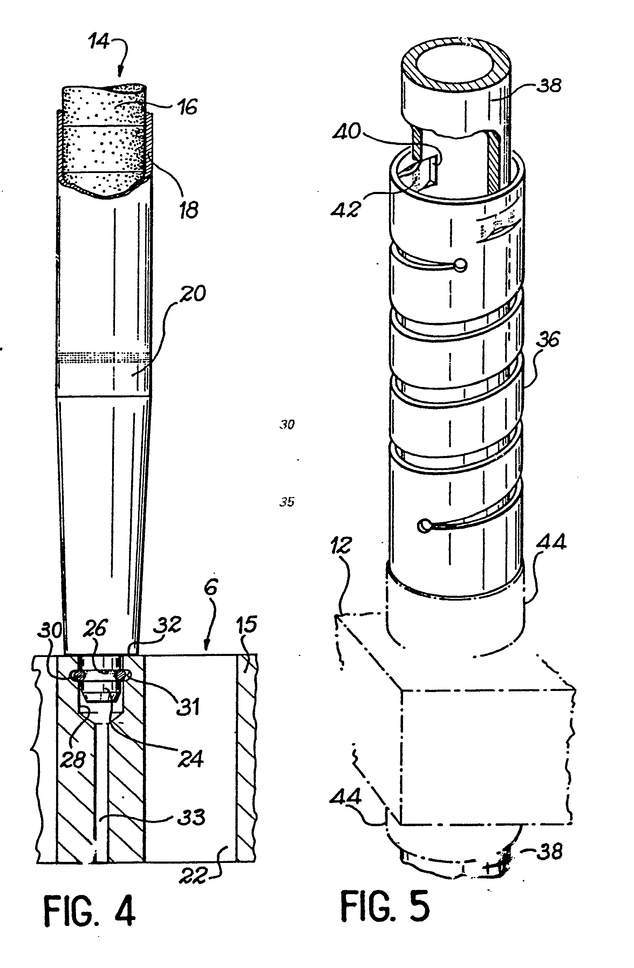

On a représenté sur la figure 4 l'extrémité inférieure d'un crayon combustible 14 et sa solidarisation à la plaque 15 de la pièce d'extrémité inférieure 6. Le bouchon 20 est allongé et profilé de telle façon qu'il prenne appui sur la plaque 15 de la pièce d'extrémité inférieure 6 entre quatre trous 22 de passage de l'eau sans obturer ceux-ci. Son extrémité présente un embout cylindrique 24 avec une gorge 26 semi-torique. L'alésage 28 dans lequel l'extrémité 24 est engagée comporte de la même manière une gorge semi-torique 31 située en regard de la gorge 26 lorsque le crayon combustible est en place. Un trou 33 de faible diamètre prolonge l'alésage 28 et permet la circulation de l'eau. Un jonc 30 de retenue prend place dans l'espace délimité par les gorges 26 et 31. L'appui du crayon combustible sur la plaque 14 est localisé sur une couronne de contact 32. Il existe un jeu entre l'embout 24 et l'alésage 28. Le jonc 30 assure ainsi la fonction anti-envol du crayon combustible 14 en solidarisant le crayon à la pièce d'extrémité.

Comme on peut le voir sur la figure 1, le bouchon supérieur comporte un embout 34 adaptable sur une pince de traction pour la mise en place du crayon 14 dans les grilles d'espacement 12.

La mise en place de l'élément 14 est réalisée en introduisant librement l'extrémité 24 dans l'alésage 28 jusqu'au jonc 30. Un jeu existe entre l'embout 24 et l'alésage 28. Une poussée axiale de 0,5 à 1 daN doit être exercée afin d'introduire le jonc 30 dans la gorge 31 et de placer l'épaulement 32 en appui sur la plaque 15. Dans cette position, l'embout 24 ne peut ressortir que sous une sollicitation axiale de même grandeur que celle qui a été nécessaire pour le mettre en place. Toutefois, il bénéficie d'une certaine liberté de déplacement dans le sens radial, ce qui laisse à la grille la fonction d'espacement des crayons.

Comme on l'a rappelé, les grilles d'espacement 12 sont réalisées entièrement en zircaloy, par exemple, les grilles décrites dans la demande de brevet français 81 19483. En raison de la relaxation particulièrement importante de ce matériau, aucun ressort assurant un serrage suffisant des crayons combustibles pendant toute la durée de vie de l'assemblage n'a pu être aménagé. La grille comporte seulement des points d'appui semi-rigides sur les crayons qui assurent l'espacement de ces derniers et la cohésion de l'ensemble du faisceau.

Conformément à l'invention, l'assemblage 1 comporte des moyens élastiques qui permettent de pousser les grilles 12 vers l'une des pièces d'extrémité, en l'occurrence la pièce d'extrémité inférieure 6. Ces moyens sont constitués par des ressorts 36 rendus solidaires à l'une de leurs extrémités de la tige centrale d'instrumentation 38 et agissant par leur deuxième extrémité sur le manchon correspondant de chaque grille. On a représenté sur la figure 5 une vue en perspective montrant le détail d'un tel ressort réalisé par exemple en inconel 718. On a pratiqué deux fenêtres rectangulaires 40 diamétralement opposées dans la paroi de la tige centrale d'instrumentation 38. On a fendu le ressort 36 et on l'a déformé de manière à introduire deux lamelles 42 à l'intérieur de chacune des fenêtres 40. Ainsi, le ressort 36 est arrêté en translation par rapport à la tige de liaison 38. A son autre extrémité, il est en appui sur le manchon 44 schématisé en trait mixte de la grille 12 également représentée en trait mixte.

Sur la figure 1a, l'assemblage 1a été représenté en début de vie. A cette étape, les points d'appui semi-rigides sur les crayons assurent un effort de serrage suffisant pour immobiliser chacune des grilles 12 par rapport aux crayons combustibles 14. Les grilles d'espacement sont donc maintenues par rapport aux crayons combustibles par cet effort de serrage.

Pendant le fonctionnement du réacteur représenté sur la figure 1b, les crayons combustibles 14 se dilatent sous l'effet de l'irradiation. Les grilles 12 suivent la dilatation des crayons combustibles, ce qui les entraîne vers le haut, puisque les crayons combustibles sont fixés à leur partie inférieure sur la pièce d'extrémité inférieure 6. Le déplacement vers le haut des grilles 12 entraîne la compression de chacun des ressorts 36.

Il en résulte entre chaque grille et l'entretoise 13 qui la sépare de la grille placée immédiatement en position inférieure un jeu Δe, puisque chaque manchon 13 coulisse librement sur la tige de liaison 10 et repose donc sur la grille inférieure.

Au cours de la durée de vie de l'assemblage, le phénomène de relaxation du zircaloy se produit. La force de serrage des points d'appui semi-rigides sur les crayons combustibles 14 se relâche. Par suite de la diminution de cet effort de serrage, les grilles 12 glissent vers le bas sous l'effet de la force exercée par les ressorts 36. Le déplacement des grilles 12 vers le bas s'arrête lorsque le jeu Δe apparu en début de vie de l'assemblage a été annulé, c'est-à-dire lorsque toutes les grilles sont en appui sur une entretoise 13. L'ensemble des grilles est alors appliqué sans jeu sur la pièce d'extrémité inférieure 6 par l'intermédiaire des entretoises 13.

Comme on le constate, ce mode de réalisation de l'invention permet d'assurer l'anti-envol des crayons combustibles et celui des grilles, tout en comportant des grilles d'espacement réalisées entièrement en zircaloy, c'est-à-dire sans impliquer la nécessité de faire appel dans la réalisation des ressorts à un matériau présentant une résistance élevée à la relaxation, comme l'inconel 718.

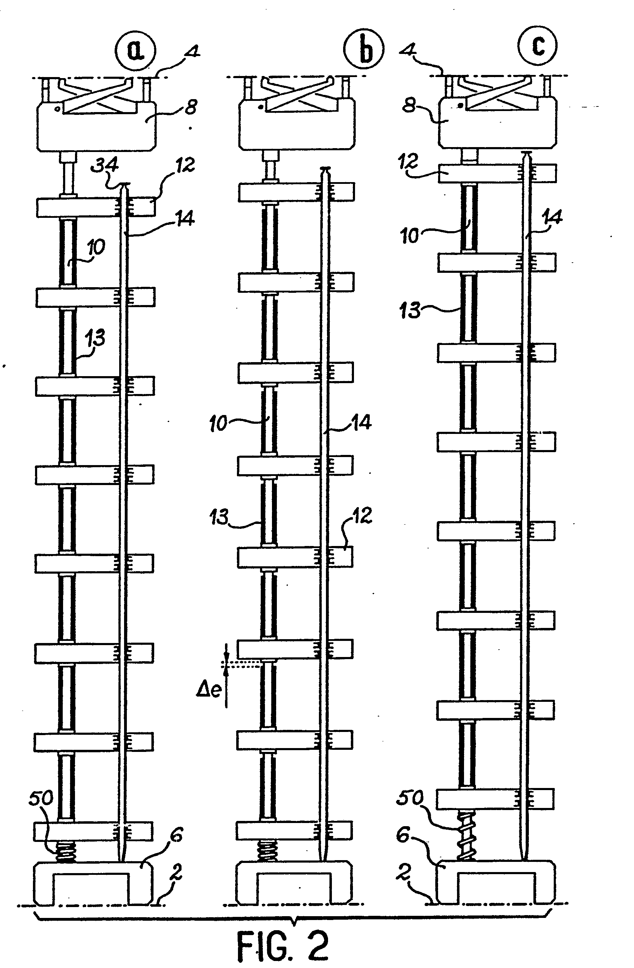

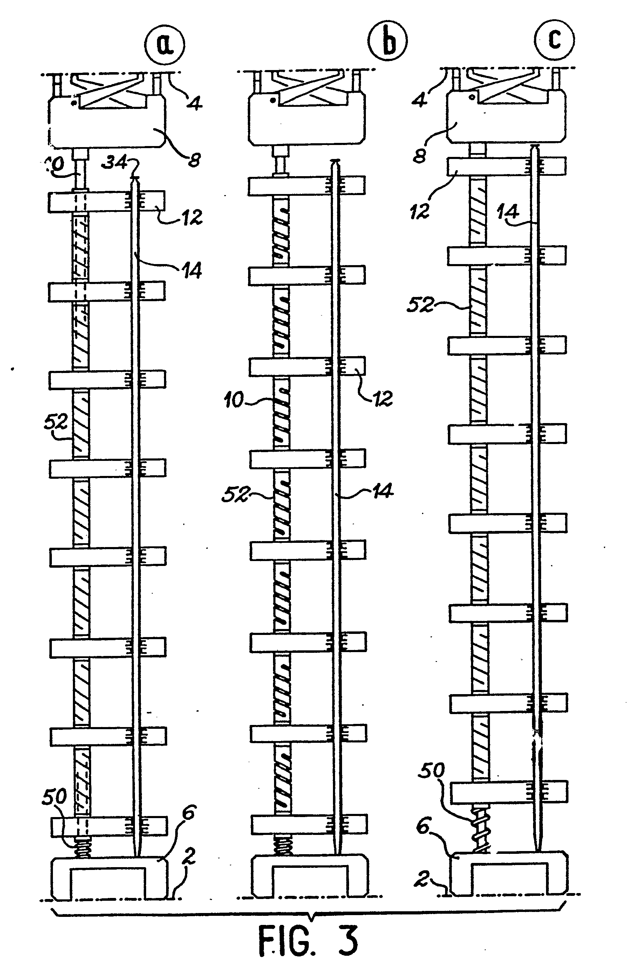

On a représenté sur les figures 2 et 3 deux variantes d'un second mode de réalisation de l'invention. Ce second mode se distingue du premier mode décrit en référence à la figure 1 en ce que les moyens élastiques qui équipent l'assemblage exercent un effort qui est dirigé de bas en haut et non pas de haut en bas. L'avantage de ce mode de réalisation est que l'effort exercé par

les moyens élastiques est inférieur, parce qu'il s'exerce dans le même sens que le courant d'eau de refroidissement, et non pas en sens inverse.

On peut donc utiliser un ressort par tige de liaison et le disposer simplement à l'extrémité basse de celle-ci, ce qui simplifie la réalisation par rapport à la disposition des figures 1 et 5.

Sur la variante de réalisation de la figure 2, les moyens élastiques sont constitués par des ressorts 50 disposés autour des tiges de liaison 10. De la même manière que dans le cas de l'assemblage représenté sur la figure 1, des entretoises 13 rigides sont disposées entre les grilles 12. L'effort exercé par les ressorts 50 sur la grille inférieure est ensuite transmis de grille en grille par l'intermédiaire de ces entretoises 13.

La figure 2a représente l'assemblage 1 en début de vie. Comme on l'a expliqué précédemment, à cette étape, l'effort de serrage des appuis semirigides 13 est suffisant pour maintenir les grilles par rapport aux crayons combustibles 14.

La figure 2b représente l'assemblage en cours de vie. Une certaine dilatation des crayons 14 a eu lieu sous l'effet de l'irradiation. Comme précédemment, les grilles 12 suivent cette dilatation des crayons parce que l'effort de serrage sur les crayons est encore important. Il en résulte, comme expliqué en référence à la figure 1, l'apparition d'un jeu Δe entre chaque entretoise et la grille qui lui est immédiatement supérieure.

La figure 2c représente l'assemblage au cours de la durée de sa vie. Par suite de la relaxation du zircaloy qui constitue les grilles d'espacement 12, l'effort de serrage des appuis semi-rigides sur les crayons combustibles s'est relâché. Par suite, l'ensemble des grilles se déplace vers le haut sous l'effet de la force exercée par l'ensemble des ressorts 50 ainsi que de la force ascendante du courant d'eau de refroidissement, cette force ascendante suffisant d'ailleurs à obtenir ce résultat. On aboutit ainsi à la position représentée sur la figure 2c dans laquelle la grille supérieure est en butée contre la pièce d'extrémité supérieure 8, et l'ensemble des jeux Δe représenté sur la figure 2b a été rattrapé. Ainsi, l'ensemble des grilles est en appui contre la pièce d'extrémité supérieure 8. Les ressorts 50 sont relâchés. L'une des fonction des ressorts 50 est de maintenir l'ensemble des grilles vers le haut lors de l'arrêt du réacteur. Tout autre moyen équivalent est évidemment utilisable.

Danns une variante perfectionnée, on dispose entre la grille supérieure et la pièce d'extrémité supérieure des ressorts de compensation.

Dans la position de la figure 2, ces ressorts, sollicités en compression, n'assurent que la retenue de la grille supérieure. Dans la suite, ils ammortissent le déplacement des grilles et, dans la position de la figure 2c, ils sont amenés à spires jointives et forment butée pour la grille supérieure. Suivant l'état du matériau utilisé, et notamment du traitement thermique qui lui a été appliqué, il est possible de disposer l'ensemble des grilles, dès le départ, en appui sur la plaque d'extrémité supérieure 8 ; dans une telle solution, le déplacement des grilles décrit dans les figures 2a et 2b n'apparaît plus.

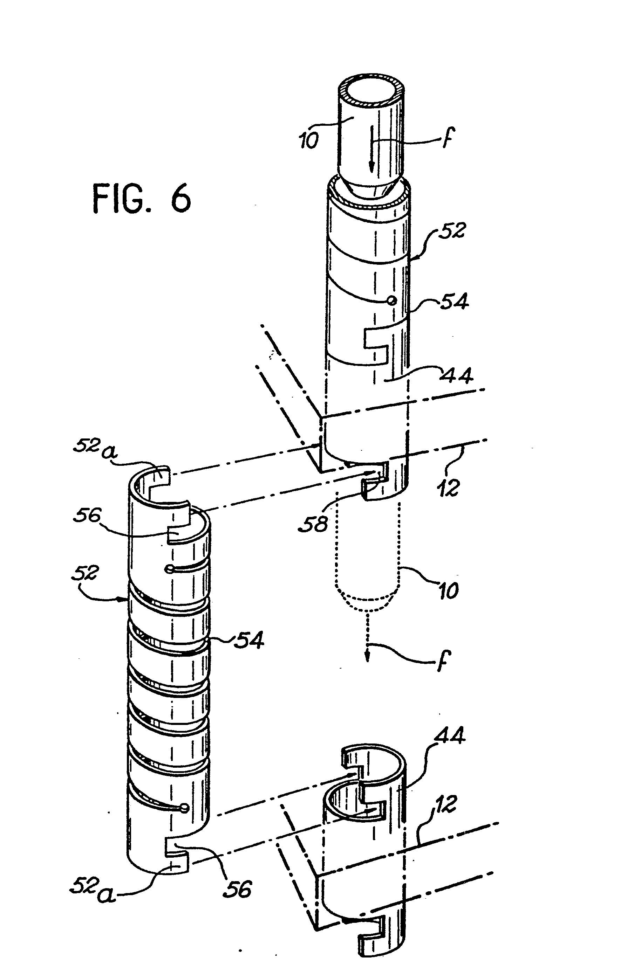

On a représenté sur les figures 3a, b, c, une variante du deuxième mode de réalisation de l'invention dans lequel les grilles sont poussées contre la pièce d'extrémité supérieure 8. Comme le mode de réalisation de la figure 2, il comporte des ressorts 50 enfilés autour des tiges de liaison 10 et disposés entre la pièce d'extrémité inférieure 6 et la grille inférieure de l'assemblage. La différence entre ces deux variantes de réalisation réside dans les entretoises. Ici, les entretoises ne sont pas rigides comme les entretoises 13 représentées sur les figures 1 et 2, mais élastiques. On a représenté sur la figure 6 une vue en perspective qui montre le détail d'une telle entretoise 52. Elle se présente sous la forme d'un manchon dans lequel on a découpé une fente en hélice 54 qui détermine des spires analogues aux spires d'un ressort. A l'état libre, les spires de l'entretoise 52 sont jointives, comme représenté sur la figure 3a. Lorsqu'on exerce une force de traction sur les extrémités 52a, on obtient la position représentée sur la figure 6. A chaque extrémité 52a, on a réalisé une encoche 56 destinée à coopérer avec une encoche analogue 58 pratiquée dans le manchon 44 de chacune des grilles 12 schématisées en trait mixte sur la figure 6.

On a représenté le montage des entretoises 52. On introduit d'abord l'extrémité 52a de chacune des entretoises élastiques 52 dans l'encoche 58 de chacun des manchons des grilles 12. Ceci réalisé, on enfile la tige de liaison 10 en la faisant coulisser dans les entretoises ou dans les manchons de grilles selon le sens de la flèche f.

Sur la figure 3a, comme sur les figures 1a et 2a, la force d'appui des bossages semi-rigides sur les crayons 14 est suffisante pour les maintenir par rapport à ces derniers.

Sur la figure 3b, sous l'effet de la dilatation des crayons 14, les grilles 12 suivent les crayons et se déplacent donc par rapport aux tiges de liaison 10. Les entretoises 52 fixées aux grilles 12 à chacune de leurs extrémités prennent la position dans laquelle les spires sont écartées, comme représenté sur la figure 3. Les entretoises élastiques exercent donc une force de traction sur les grilles qui tendent à les rapprocher. Toutefois, cette force est inférieure aux forces de frottement qui existent au niveau des points d'appui rigide sur les crayons et de ce fait, à ce stade, les grilles restent encore immobiles par rapport aux crayons combustibles 14.

Sur la figure 3c, qui représente l'assemblage 1 au cours de la durée de sa vie, s'est produit la relaxation du zircaloy. Le serrage des crayons s'est relâché, de telle sorte que les grilles se sont rapprochées l'une de l'autre sous l'effet de l'action de traction exercée par chacune des entretoises élastiques 52 superposée à l'effort ascendant du fluide de refroidissement. L'ensemble des grilles s'est ainsi déplacé vers le haut et se trouve en appui contre la pièce d'extrémité supérieure 8. On aboutit à une position analogue à celle représentée sur la figure 2a de la variante précédente. Dans cette position, les ressorts 50 sont détendus.

La différence entre les variantes des figures 2 et 3 réside dans le fait qu'il n'apparaît, à aucun moment, dans ce dernier mode de réalisation, de jeu entre les entretoises et les grilles. Ceci provient du fait que les entretoises sont élastiques et qu'elles peuvent absorber le jeu Δe dont il a été question en référence aux figures 1 et 2. Ceci supprime toute vibration des entretoises au cours du fonctionnement du réacteur.

Par ailleurs, ce dernier mode de réalisation conserve l'avantage, déjà évoqué dans le cas de la variante de réalisation de la figure 2, de plaquer l'ensemble des grilles contre la pièce d'extrémité supérieure, ce qui réduit l'effort nécessaire, puisqu'il agit dans le même sens que la force due au courant d'eau de refroidissement. Ainsi, il suffit de dimensionner les ressorts 50 pour qu'ils soient capable de maintenir les grilles et les entretoises dans la position qu'elles occupent sur la figure 3c pendant l'arrêt du réacteur.

Les grilles de l'assemblage combustible peuvent comporter, de manière classique, des manchons de grille disposés dans les alvéoles des grilles d'espacement traversés par les tiges de liaison. Ces manchons sont soudés aux grilles et les entretoises rigides 12 prennent appui sur les extrémités des manchons de grilles.

L'invention concerne une réalisation plus simple de ces grilles guidées axialement sur les tiges de liaison, dans lesquelles les manchons ont été supprimés.

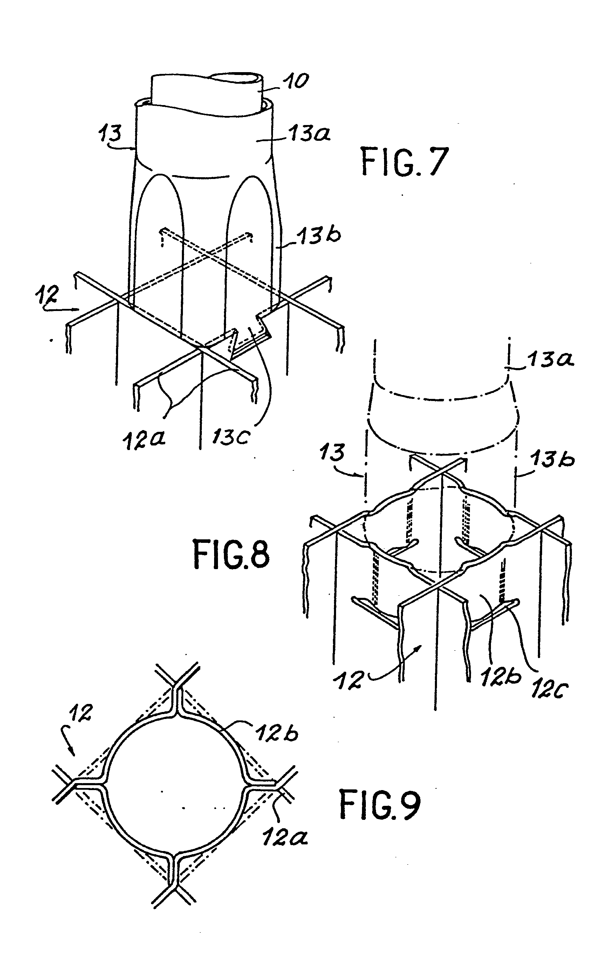

Selon une première réalisation, représentée sur la figure 7, les tôles 12a de la grille 12 ne comportent aucun prolongement. Pour assurer le contact de la grille 12 avec l'entretoise rigide 13a, cette dernière présente une partie centrale 13a dont le diamètre est légèrement supérieur au diamètre extérieur de la tige de liaison 10 sur laquelle elle est enfilée. De cette manière, l'entretoise 13 coulisse sur la tige de liaison. Par ailleurs, l'entretoise 13 comporte, de part et d'autre de la zone centrale 13a, deux parties extrêmes, dont une seule a été représentée sur la figure 7. Les parties 13b sont destinées à venir prendre appui sur les champs des tôles 12a qui constituent la grille d'espacement 12 des crayons combustibles de l'assemblage. La partie 13b présente donc une section variable. Elle est circulaire à l'endroit où elle est raccordée à la partie circulaire 13a et sa section varie jusqu'à devenir polygonale à l'endroit où elle est en appui sur la grille 12. Cette section polygonale présente au moins quatre côtés opposés parallèles deux à deux dont les prolongements se couperaient à angle droit. Par exemple, il peut s'agir d'une section carrée, octogonale, ou carrée à angles arrondis, comme représenté sur la figure 7.

Pour éviter la rotation de l'entretoise 13 autour de la tige de liaison 10, ce qui serait néfaste à son appui sur la grille 12, l'entretoise est munie de moyens propres à empêcher une rotation relative de ces deux pièces. Dans l'exemple de réalisation représenté sur la figure 7, ces moyens sont constitués par un tenon 13c qui vient se loger dai une mortaise découpée dans l'une des tôles 12a formant la grille. Aucun formage n'est nécessaire sur les tôles 12a de la grille parce que la surface ( contact entre l'entretoise 13 et cette dernière est toujours suffisante. Ce contact est maintenu en permanence au cours du fonctionnement grâce ai moyens propres à éviter la rotation mentionnés précédemment.

Selon une autre réalisation représentée sur les figures 8 et 9, les parties centrales des tôles 12a d la grille 12 qui forment les quatre côtés d'un alvéc traversé par une tige de liaison 10 sont conformée de manière à présenter une forme arrondie sensiblement circulaire dans leur partie centrale. Cette déformation de la tôle peut être pratiquée su la totalité de la hauteur de cette dernière ou bien sur une partie seulement, comme représenté sur l; figure 8. On réalise une boutonnière 12c qui limite la partie de section arrondie 12b. L'entretoise rigid 13, représentée en trait mixte sur la figure 8, comporte une partie centrale 13a dont le diamètre intérieur est légèrement supérieur au diamètre externe de la tige de liaison 10, et deux parties d'extrémité 13b dont une seule a été représentée sur la figure 8. La partie 13b présente un diamètre final qui correspond à celui des parties arrondies 12b de la grille 12. Une fois la grille assemblée, l'entretoise 13 repose sur cette dernières par les parties 12b. La surface de contact est inférieure à l; section de l'entretoise 13, mais elle est néanmoins suffisante. On remarque que dans cette réalisation, il n'est pas nécessaire de prévoir de moyens pour empêcher la rotation relative de l'entretoise par rapport à la grille, car la zone d'appui présente une symétrie de révolution.

La déformation peut être plus ou moins prononcée. On peut arriver à obtenir une zone de contact formant un cercle complet, comme représenté sur la figure 9. Dans ce cas, la zone d'appui de l'entretoise 13 sur la grille 12 est augmentée.

Cette réalisation ne diminue aucunement 1a section de passage de l'eau. Elle diminue donc les pertes de charge autour des tiges de liaison 10. On conserve la fonction d'encastrement des tiges de liaison 10 dans la grille en désaxant légèrement les parties déformées 12b qui s'appliquent ainsi sur la tige de liaison 10 avec une pression due à la flexion locale de la tôle constituant la grille. On remarque par ailleurs que cette réalisation est simple et facile à mettre en oeuvre et qu'elle permet un gain de matière. Elle ne nécessite aucun soudage supplémentaire lors de l'assemblage de la grille.

On constate donc qu'avec les réalisations de la grille et des tubes-guides qui viennent d'être décrites en référence aux figures 7 à 9, l'appui des entretoises sur les grilles présente une surface suffisante pour éviter l'interpénétration des matériaux du fait de la pression de contact. Cet appui est conservé même dans le cas où il y a un éventuel décollement des surfaces en contact.

## Revendications

1. Assemblage combustible de réacteur nucléaire refroidi à l'eau, comportant :
- deux pièces d'extrémité, respectivement une pièce d'extrémité supérieure (8) et une pièce d'extrémité inférieure (6), ces pièces comportant des orifices (22) pour la circulation de l'eau légère de refroidissement,
- des tiges de liaison rigides ou tubes-guides (10), fixées à leurs deux extrémités, respectivement à la pièce d'extrémité inférieure (6) et à la pièce d'extrémité supérieure (8),
- des grilles d'espacement (12) réalisées en un métal présentant une relaxation sous irradiation et constituées par deux familles de tôles perpendiculaires, ces grilles (12) délimitant des alvéoles traversés chacun soit par un crayon combustible (14) soit par une tige de liaison (10), lesdites grilles d'espacement (12) étant réparties le long desdites tiges de liaison, les parois de chaque alvéole comportant des éléments d'appui qui maintiennent les crayons combustibles (14), denkles extrémités sont solidaires de la pièce d'extrémité inférieure (6),
caractérisé en ce qu'il comporte des entretoises (13, 52) enfilées sur les tiges de liaison (10) et disposées entre les grilles (12) et des moyens à ressorts (36, 50) plaquant l'ensemble des grilles (12) vers l'une desdites pièces d'extrémité inférieure (6) et supérieure (8) aussi bien pendant le fonctionnement du réacteur qu'à l'arrêt, les grilles (12) et les éléments d'appui qui maintiennent les crayons combustibles (14) étant réalisés en un matériau unique qui présente un faible pouvoir d'absorption des neutrons.

2. Assemblage combustible selon la revendication 1, caractérisé en ce que les bouchons (20) des crayons combustibles (14) situés à l'extrémité solidarisée avec la pièce d'extrémité inférieure (6) sont alongés et comportent à leur extrémité un embout cylindrique (24) muni d'une gorge annulaire (26), la plaque (15) de la pièce d'extrémité correspondante (6) comportant un alésage (28) destiné à recevoir l'embout (24) du bouchon (20), cet alésage (28) comportant une gorge annulaire semi-torique (31) dans laquelle est logé un jonc flottant (30).

3. Assemblage combustible selon la revendication 2, caractérisé en ce que l'alésage (28) est prolongé par un orifice (33) de plus faible diamètre permettant la circulation de l'eau.

4. Assemblage combustible selon la revendication 1, caractérisé en ce que lesdites entretoises (13) sont rigides, un ressort (36) étant associé à chaque grille (12), et repoussant cette grille (12) vers la pièce d'extrémité inférieure (6).

5. Assemblage combustible selon la revendication 4, caractérisé en ce qu'il comporte une tige de liaison centrale (38), les ressorts (36) étant enfilés sur ladite tige de liaison centrale (38) et arrêtés à l'une de leurs extrémités sur cette tige de liaison centrale (38).

6. Assemblage combustible selon la revendication 1, caractérisé en ce que lesdites entretoises (13) sont rigides, des ressorts (50) étant enfilés sur lesdites tiges de liaison (10) et disposés entre l'autre pièce d'extrémité (6) et la grille correspondante (12), ces ressorts (50) poussant ladite grille (12) ainsi que les autres grilles (12) contre ladite pièce d'extrémité supérieure (8) par l'intermédiaire des entretoises rigides (13).

7. Assemblage combustible selon la revendication 6, caractérisé en ce qu'il comporte également un ressort de compensation entre la grille supérieure et la pièce d'extrémité supérieure (8).

8. Assemblage combustible selon l'une quelconque des revendications 1 à 3, caractérisé en ce que les entretoises (52) sont extensibles, des ressorts (50) étant enfilés sur lesdites tiges de liaison (10) entre l'autre pièce d'extrémité (6) et la grille correspondante (12).

9. Assemblage combustible selon la revendication 1, caractérisé en ce que le métal présentant une relaxation sous irradiation dont les grilles sont constituée est le zircaloy.

10. Assemblage combustible selon la revendication 4 ou 6, dans lequel les entretoises rigides (13) enfilées sur les tiges de liaison (10) comportent une partie centrale (13a) coulissant sur les tiges de liaison (10) et deux parties d'extrémité (13b) qui se terminent par une section polygonale ayant au moins quatre côtés opposés et parallèles deux à deux, dont les prolongements se coupent à angle droit, les extrémités de l'entretoise (13) servant de points d'appui sur les champs des tôles (12a) constituant la grille (12).

11. Assemblage combustible selon la revendication 10, dans lequel des moyens destinés à empêcher une rotation relative d'une entretoise rigide (13) par rapport à la grille (12) sont prévus.

12. Assemblage combustible selon la revendication 11, caractérisé en ce que les moyens destinés à éviter une rotation relative de l'entretoise (13) par rapport à la grille (12) sont constitués par un tenon (13c) solidaire de l'entretoise (13) et par une mortaise correspondante pratiquée dans une tôle (12a) de la grille (12).

13. Assemblage combustible selon la revendication 4 ou la revendication 6, dans lequel les entretoises rigides (13) enfilées sur les tiges de liaison (10) comportent une partie centrale (13a) coulissant sur les tiges de liaison (10) et deux parties d'extrémité (13b) qui se terminent par une section cylindrique de plus grand diamètre, les tôles (12a) constituant les parois des alvéoles traversés par les tiges de liaison (10) comportant, dans leur partie centrale, une courbure circulaire (12b) dont le rayon correspond à celui des parties d'extrémité (13b) des entretoises rigides (13), les extrémités de l'entretoise (13) venant prendre appui sur les parties présentant une courbure (12b) de la grille (12).

14. Assemblage combustible selon la revendication 13, caractérisé en ce que les parties courbées (12b) forment un cercle complet de même diamètre que le cercle de la partie (13b) de plus grand diamètre de l'entretoise rigide (13).

**Patentansprüche**

1. Brennelementebündel für wassergekühlte Kernreaktoren, mit:
- Zwei Endstücken, nämlich einem oberen Endstück (8) und einem unteren Endstück (6), wobei diese Stücke Öffnungen (22) zur Durchströmung mit leichtem Kühlwasser aufweisen,
- Starren Verbindungsstangen oder Rohrführungen (10), die an ihren beiden Enden an dem unteren Endstück (6) bzw. dem oberen Endstück (8) befestigt sind,
- Abstandsgittern (12), die aus einem sich bei Bestrahlung entspannenden Metall hergestellt und von zwei senkrechten Gruppen aus Blechen gebildet sind, wobei diese Gitter (12) Zellen begrenzen, von denen jede entweder von einem Brennstab (14) oder einer Verbindungsstange (10) durchquert ist, und die Abstandsgitter (12) längs der Verbindungsstangen verteilt sind, und die Wände einer jeden Zelle Stützelemente aufweisen, die die Brennstäbe (14) halten, deren Enden fest mit dem unteren Endstück (6) verbunden sind, dadurch gekennzeichnet, daß das Brennelementebündel Abstandsstücke (13, 52), die auf die Verbindungsstangen (10) aufgereiht und zwischen den Gittern (12) angeordnet sind, und Federmittel (36, 50) umfaßt, die die Gesamtheit der Gitter (12) zu dem unteren (6) oder oberen (8) Endstück sowohl beim Betrieb als auch bei Stillstand des Reaktors drücken, und daß die Gitter (12) und die Stützelemente, die die Brennstäbe (14) halten, aus einem einzigen Material hergestellt sind, welches ein geringes Absorptionsvermögen für Neutronen aufweist.

2. Brennelementebündel nach Anspruch 1, dadurch gekennzeichnet, daß die Zapfen (20) der Brennstäbe (14), die sich an dem mit dem unteren Endstück (6) fest verbundenen Ende befinden, länglich sind und an ihrem Ende ein zylindrisches Endteil (24) aufweisen, welches mit einer Ringnut (26) versehen ist, daß die Platte (15) des entsprechenden Endstücks (6) eine Bohrung (28) zur Aufnahme des Endteils (24) des Zapfens (20) aufweist, wobei diese Bohrung (28) eine halbtorusförmige Ringnut (31) umfaßt, in der ein Sprengring (30) lose angeordnet ist.

3. Brennelementebündel nach Anspruch 2, dadurch gekennzeichnet, daß die Bohrung (28) mit einer Öffnung (33) geringeren Durchmessers verlängert ist, die die Durchströmung mit Wasser ermöglicht.

4. Brennelementebündel nach Anspruch 1, dadurch gekennzeichnet, daß die Abstandsstücke (13) starr sind, daß jedem Gitter (12) eine Feder (36) zugeordnet ist und dieses Gitter (12) zu dem unteren Endstück (6) drückt.

5. Brennelementebündel nach Anspruch 4, dadurch gekennzeichnet, daß es eine mittlere Verbindungsstange (38) umfaßt, daß die Federn (36) auf diese mittlere Verbindungsstange (38) aufgereiht und mit einem ihrer Enden an dieser mittleren Verbindungsstange (38) festgehalten sind.

6. Brennelementebündel nach Anspruch 1, dadurch gekennzeichnet, daß die Abstandsstücke (13) starr sind, daß Federn (50) auf die Verbindungsstangen (10) aufgereiht und zwischen dem anderen Endstück (6) und dem entsprechenden Gitter (12) angeordnet sind, daß diese Federn (50) das Gitter (12) sowie die anderer Gitter (12) gegen das obere Endstück (8) mittels de starren Abstandsstücke (13) drücken.

7. Brennelementebündel nach Anspruch 6, dadurch gekennzeichnet, daß es auch eine Ausgleichsfeder zwischen dem oberen Gitter und dem oberen Endstück (8) aufweist.

8. Brennelementebündel nach einem der Ansprüche 1 bis 3, dadurch gekennzeichnet, daß di Abstandsstücke (52) streckbar sind und daß die Federn (50) auf die Verbindungsstangen (10) zwischen dem anderen Endstück (6) und dem entsprechenden Gitter (12) aufgereiht sind.

9. Brennelementebündel nach Anspruch 1, dadurch gekennzeichnet, daß das eine Entspannung bei Bestrahlung aufweisende Metall, aus dem die Gitter gebildet sind, Zirkaloy ist.

10. Brennelementebündel nach Anspruch 4 oder 6, bei dem die starren, auf die Verbindungsstangen (10) aufgereihten Abstandsstücke (13) einen mittleren Abschnitt (13a), der auf den Verbindungsstangen (10) verschiebbar ist, und zwei Endabschnitte (13b) umfassen, die in einem polygonalen Querschnitt enden, der wenigstens vier jeweils paarweise zueinander parallele, gegenüberliegende Seiten aufweist, deren Verlängerungen sich unter einem rechten Winkel schneiden, wobei die Enden des Abstandsstückes (13) als Stützpunkte auf den hochkantigen, das Gitter (12) bildenden Blechen (12a) dienen.

11. Brennelementebündel nach Anspruch 10, bei dem Mittel vorgesehen sind, die dazu dienen, eine relative Drehung eines starren Abstandsstückes (13) in Bezug auf das Gitter (12) zu verhindern.

12. Brennelementebündel nach Anspruch 1, dadurch gekennzeichnet, daß die Mittel, die dazu bestimmt sind, eine relative Drehung des Abstandsstückes (13) in Bezug auf das Gitter (12) zu verhindern, von einer fest mit dem Abstandsstück (13) verbundenen Nase (13c) und einer entsprechenden, in einem Blech (12a) des Gitters (12) hergestellten Ausnehmung gebildet sind.

13. Brennelementebündel nach Anspruch 4 oder 6, bei dem die starren, auf die Verbindungsstangen (10) aufgereihten Abstandsstücke einen mittleren Abschnitt (13a), der auf den Verbindungsstangen (10) gleitet, und zwei Endabschnitte (13b) aufweisen, die mit einem zylindrischen Querschnitt größeren Durchmessers enden, daß die Bleche (12a), die die Wände der von den Verbindungsstangen (10) durchquerten Zellen bilden, in ihrem mittleren Abschnitt eine kreisförmige Krümmung (12b) aufweisen, deren Radius demjenigen der Endabschnitte (13b) der starren Abstandsstücke (13) entspricht, und daß sich die Enden der Abstandsstücke (13) auf den eine Krümmung (12b) aufweisenden Abschnitten des Gitters (12) abstützen.

14. Brennelementebündel nach Anspruch 13, dadurch gekennzeichnet, daß die gekrümmten Abschnitte (12b) einen vollständigen Kreis mit dem gleichen Durchmesser wie der Kreis des Abschnittes (13b) mit größerem Durchmesser des starren Abstandsstückes (13) bilden.

## Claims

1. Fuel assembly for a water-cooled nuclear reactor, comprising:
   - two end members, respectively an upper end member (8) and a lower end member (6), said members comprising orifices (22) for circulation of light water coolant,
   - rigid connecting rods or tube-guides (10) fixed at their two ends respectively to the lower end member (6) and to the upper end member (8),
   - spacer grids (12) formed from a metal exhibiting stress-relief on irradiation, and constituted by two groups of perpendicular sheets, said grids (12) delimiting cells, each traversed either by a fuel rod (14) or by a connecting rod (10), said spacer grids (12) being distributed lengthwise of said connecting rods, the walls of each cell comprising bearing members which locate the fuel rods (14), their lower ends being fixed to the lower end member (6),
   characterized in that it comprises spacers (13, 52) threaded on the connecting rod (10) and positioned between the grids (12), and spring means (36, 50) urging the assembly of grids (12) towards one of the lower (6) and upper (8) end members, both during operation and non-operation of the reactor, the grids (12) and the bearing elements for locating the fuel rods (14) being formed from a single material having a low neutron-absorbing capacity.

2. Fuel assembly according to claim 1, characterized in that the end caps (20) of the fuel rods (14) located at the end fixed to the lower end member (6), are elongated and comprise at their ends a terminal member (24) having an annular groove (26), the plate (15) of the corresponding end member (6) comprising a bore (28) adapted to receive the terminal member (24) of the end cap (20), said bore (28) comprising a semi-toroidal annular groove (31), within which a gasket (30) is held.

3. Fuel assembly according to claim 2, characterized in that the bore (28) is prolonged by a narrower orifice (33) for water circulation.

4. Fuel assembly according to claim 1, characterized in that said spacers (13) are rigid, a spring (36) being associated with each grid (12) and urging each grid (12) towards the lower end member (6).

5. Fuel assembly according to claim 4, characterized in that it comprises a central connecting rod (38), springs (36) being threaded on said central connecting rod (38) and stopped at one of their ends on the central connecting rod (38).

6. Fuel assembly according to claim 1, characterized in that said spacers (13) are rigid, springs (50) being threaded on said connecting rods (10) and located between the other end member (6) and the corresponding grid (12), said springs (50) pushing said grid (12) as well as other grids (12) against said upper end member (8) through the rigid spacers (13).

7. Fuel assembly according to claim 6, characterized in that it also comprises a compensating spring between the upper grid and the upper end member (8).

8. Fuel assembly according to any one of claims 1 to 3, characterized in that the spacers (52) are extendible, springs (50) being threaded on said connecting rod (10) between the other end member (6) and the corresponding grid (12).

9. Fuel assembly according to claim 1, characterized in that the metal exhibiting stress relief on irradiation that forms the grids is zircaloy.

10. Fuel assembly according to claim 4 or 6, in which the rigid spacers (13) threaded on the connecting rods (10) comprise a central portion (13a) sliding on the connecting rods (10) and two end portions (13b) terminating in a polygonal section having at least four opposed sides, opposed pairs of which are parallel, prolongations which cross at right angles, the ends of the spacer (13) acting as bearing members on assemblies of sheets (12a) constituting the grid (12).

11. Fuel assembly according to claim 10, which is provided with means adapted to prevent relative rotation between a rigid spacer (13) and the grid (12).

12. Fuel assembly according to claim 11, characterized in that the means for avoiding relative rotation between the spacer (13) and the grid (12) comprise a tenon (13c) fixed to the spacer (13) and a corresponding mortise formed in a sheet (12a) of the grid (12).

13. Fuel assembly according to claim 4 or claim 6, in which rigid spacers (13) threaded on connecting rods (10) comprise a central portion (13a) sliding on connecting rods (10) and two end portions (13b) which terminate in a wider cylindrical section, the sheets (12a) constituting the walls of the cells traversed by the connecting rods (10) comprising in their central portions, a circularly-curved portion (12b) whose radius corresponds to that of the end portions (13b) of the rigid spacers (13), the ends of the spacer (13) bearing on the curved portions (12b) of the grid (12).

14. Fuel assembly according to claim 13, characterized in that the curved portions (12b) form a complete circle having the same diameter as the circle of the wider portion (13b) of the rigid spacer (13).

FIG. 1

FIG. 2

FIG. 3

FIG. 4

FIG. 5

FIG. 6

FIG.7

FIG.8

FIG.9